# EUROPÄISCHE PATENTANMELDUNG

(11) **EP 0 742 136 A2**
(43) Veröffentlichungstag der Anmeldung: **13.11.1996**
(21) Anmeldenummer: 96107094.3
(22) Anmeldetag: 06.05.1996
(51) Int. Cl.: B62J 6/00

(54) **Lichtanlage**

(30) Priorität: 09.05.1995 CH 1340/95
(71) Anmelder: Kauer, Eugen, 6314 Unterägeri (CH)
(72) Erfinder: Kauer, Eugen, 6314 Unterägeri (CH)
(74) Vertreter: Hotz, Klaus, Dipl.-El.-Ing./ETH Patentanwalt

(57) **Zusammenfassung**

Lichtanlage für nichtmotorisch angetriebene Fahrzeuge wie Fahrräder und Anhänger.
Ein Lichtmaschine **(18)** wird durch ein Endloselement **(24)** angetrieben. Sie ist an einen Schaltkreis **(6)** angeschlossen, welcher einen oder mehrere, durch einen Schalter **(34)** an- und abschaltbare Beleuchtungskörper **(4a, 4b)** sowie einen Akkumulator aufweist. Das Endloselement **(24)** wird durch ein Antriebsrad **(26)** in Bewegung versetzt. Dieses Antriebsrad **(26)** ist auf der Welle **(28)** eines der Räder **(2a, 2b)** des Fahrzeuges **(2)** angeordnet und dreht sich solidarisch mit diesem.

## Beschreibung

Die Erfindung betrifft eine Lichtanlage nach dem Oberbegriff des Patentanspruchs 1.

Lichtanlagen dieser Art werden vor allem für übliche Fahrräder und Elektrofahrräder verwendet, können aber auch für einfache Anhänger, beispielsweise zweirädrige Anhänger, benutzt werden.

Frühere Fahrräder wiesen meist nur einen Beleuchtungskörper, nämlich ein Vorderlicht auf, das hauptsächlich dem Zweck diente, die zu befahrende Fahrbahn zu erhellen; anstelle eines Rücklichtes war höchstens ein Rückstrahler vorgesehen. Mit zunehmendem Verkehr wuchs die Gefährdung der Radfahrer in der Dunkelheit, so dass als weiterer Beleuchtungskörper ein Rücklicht üblich und nach einiger Zeit sogar gesetzlich vorgeschrieben wurde. Zum Betrieb dieser Beleuchtungskörper diente und dient auch heute noch ein Dynamo. Herkömmliche Dynamos sind meist an der vorderen Radgabel befestigt und können, wenn Licht benötigt wird, so verstellt werden, dass ein die Dynamowelle antreibendes Reibrad an der Seitenfläche des Reifens anliegt und so beim Fahren angetrieben wird. Diese Antriebsweise für den Dynamo weist zahlreiche Nachteile auf. Das Reibrad wird vom Reifen verschmutzt; Reibrad und Reifen unterliegen einem verhältnismässig grossen Verschleiss; die Lenkung des Vorderrades wird durch die einseitige Bremswirkung, die das Reibrad ausübt, erschwert. Es wurde daher versucht, die Dynamowelle auf andere Weise anzutreiben.

Die **DE-41 09 006 A1** beispielsweise beschreibt eine Lichtanlage für ein Fahrrad mit einem Dynamo, dessen Welle ein Ritzel aufweist. Das Ritzel wird durch ein Endloselement, nämlich die Fahrradkette, angetrieben, welche ihrerseits durch die Rotation der Pedale in Bewegung versetzt wird. Diese Einrichtung eignet sich nur für die sehr seltenen Fahrräder mit Nabenschaltung, während sie für die weit stärker verbreiteten Fahrräder mit Kettenschaltung untauglich ist, da sich bei diesen die Fahrradkette bei jedem Schaltvorgang in Richtung der Radachse auf ein anderes Getrieberad verschiebt. Zwar wird in der erwähnten DE-41 09 006 eine für Fahrräder mit Kettenschaltung geeignete Konstruktion vorgeschlagen, bei welcher der Dynamo in der Schaltvorrichtung integriert ist. Dadurch erhält man eine sehr kompakte gewissermassen multifunktionale Vorrichtung, die jedoch - wie die meisten multifunktionalen Einrichtungen, erstens ziemlich störanfällig und bei der zweitens gelegentlich notwendige Unterhalts- und Reparaturarbeiten sehr aufwendig sind. Ungünstig ist auch, dass mehrere Hilfseinrichtungen, d. h. die Schaltvorrichtung und die Lichtanlage, im Bereich des Hinterrades auf derselben Radseite angeordnet sind.

Im Gegensatz zu früher, als Fahrräder im Stillstand unbeleuchtet waren, ist es heute infolge der grösseren Gefahren im Strassenverkehr erwünscht, auch bei stehendem Fahrrad die Beleuchtungskörper in Betrieb zu halten. Zu diesem Zwecke werden die Schaltkreise mit Akkumulatoren versehen, die von der Lichtmaschine aufgeladen werden können. Damit erreicht man bei geeigneter Schaltung nicht nur, dass die Beleuchtungskörper auch im Stillstand mit Strom versorgt werden, sondern auch, dass die Lichtstärke von der Geschwindigkeit des Fahrrades unabhängig ist; beides ist bei direktem und alleinigem Dynamobetrieb nicht der Fall.

Die in der bereits mehrfach erwähnten **DE-41 09 006 A1** beschriebene Lichtanlage weist ebenfalls einen Akkumulator auf. Der Dynamo ist so am Fahrrad angebracht, dass er aus einer Ruhestellung, in welcher das Dynamoritzel nicht mit der Fahrradkette im Eingriff steht, in eine Wirkstellung verschiebbar ist, in welcher Dynamoritzel und Fahrradkette antriebsmässig verbunden sind. Der Akkumulator wird also nur dann aufgeladen, wenn der Dynamo seine Wirkstellung einnimmt. Ob ein Schalter zum Abschalten der Beleuchtungskörper vorgesehen ist, geht nicht aus der Beschreibung hervor. Ist kein Schalter vorhanden, so leuchten die Beleuchtungskörper während der Zeit, während welcher der Dynamo in seiner Wirkstellung ist, und nur während dieser Zeit wird auch der Akkumulator aufgeladen. Zwar wäre es durchaus möglich, auch am Tag mit Licht zu fahren, doch wird dies wahrscheinlich kaum gemacht, weil dadurch ja ein Teil der mit Mühe erzeugten elektrischen Energie sinnlos verbraucht wird und nicht zur Aufladung des Akkumulators dient, und weil man - selbst wenn man den Akkumulator Generator aufladen sollte - voraussichtlich ohnehin das Bestreben hat, den Dynamo auszuschalten, um müheloser zu fahren. Dies hat zur Folge, dass der Akkumulator bei Tagesfahrten nicht aufgeladen wird, so dass er anschliessend ungenügend aufgeladen ist und sich rasch entlädt. Ist ein Schalter vorhanden, so wäre es möglich, tagsüber den Akkumulator aufzuladen, ohne dass die Beleuchtungskörper in Betrieb sind. Es ist aber anzunehmen, dass auch in diesem Fall der Dynamo häufig nicht in Betrieb genommen wird, eben weil man es vorzieht, die zu seinem Betrieb nötige Leistung nicht zu erbringen. Es besteht also auch hier die oben beschriebene Gefahr, dass der Akkumulator nicht genügend aufgeladen wird.

Die Aufgabe der Erfindung wird somit darin gesehen, die oben beschriebene Lichtanlage so zu verbessern, dass die genannten Nachteile beseitigt werden.

Diese Aufgabe wird erfindungsgemäss durch die Merkmale des Kennzeichens des Patentanspruchs 1 gelöst.

Vorteilhafte Weiterbildungen und bevorzugte Ausführungsbeispiele der erfindungsgemässen Lichtanlage werden durch die abhängigen Patentansprüche definiert.

Mit der erfindungsgemässen Lichtanlage erhält man eine Einrichtung, deren mechanischer Teil einfach in der Herstellung, der Montage und der Wartung ist; der elektrische Teil der neuen Lichtanlage ist ebenfalls sehr zweckmässig, indem der Akkumulator beim Fahren permanent aufgeladen wird und daher für Fahrten bei Nacht oder im Nebel immer genügend geladen ist, ohne dass man schönen Tagen mit Licht gefahren fahren muss und dabei einen Teil der gespeicherten elektrischen Energie zwecklos verbraucht.

Bei der erfindungsgemässen Lichtanlage wird also die Lichtmaschine wie bei der oben erwähnten vorbekannten Lichtanlage über ein Endloselement aufgeladen. Während aber bei der vorbekannten Lichtanlage, die nur für Fahrzeuge mit Antriebskette einsetzbar ist, das Endloselement durch die Antriebskette gebildet wird, die ihrereseits z.B. durch ein mit den Pedalen verbundenes Antriebsrad angetrieben wird, ist bei der erfindungsgemässen Lichtanlage ein Endloselement vorgesehen, das nicht zum Antrieb des Fahrzeuges dient, sondern das durch ein Antriebsrad getrieben wird, das auf der Welle eines der Räder des Fahrzeuges angeordnet ist und sich mit dieser dreht. Bei der vorbekannten Lichtanlage wird die Lichtmaschine nur angetrieben, wenn die Pedale getreten werden, während bei der erfindungsgemässen Lichtanlage z.B. auch beim Abwärtsfahren, wenn das Treten der Pedale überflüssig ist, die Lichtmaschien angetrieben wird.

Ueblicherweise verwendet man eine einer Fahrradkette ähnliche Antriebskette als Endloselement, ferner ein Spezialzahnrad als und eine Lichtmaschinenwelle mit einem Lichtmaschinenritzel, wobei die Antriebskette das Antriebsrad und das Lichtmaschinenritzel antriebsmässig verbindet.

Die erfindungsgemässe Lichtanlage kann im Gegensatz zur vorbekannten Lichtanlage nicht nur für Fahrräder sondern auch für antriebslose Anhänger verwendet werden, bei welchen das Antriebsrad auf der Welle eines der Laufräder angeordnet ist.

Allerdings eignet sich die Lichtanlage besonders für Fahrräder, wobei das Antriebsrad auf der Welle des als Triebrad dienenden Hinterrades angeordnet ist.

Man erhält dabei eine sehr vorteilhafte Anordnung, wenn man die beiden Endloselemente, also die Fahrzeug-Antriebskette bzw. die Fahrradkette und die Lichtmaschinenantriebskette, auf entgegengesetzten Seiten des Triebrades anordnet.

Bei einer besonders bevorzugten Ausführungsform besitzt der Akkumulator Ladebuchsen, so dass er auch über eine externe Spannungsquelle aufgeladen werden kann; ein Akkulator, der völlig erschöpft ist, beispielsweise weil beim Abstellen des Fahrzeuges vergessen wurde, die Beleuchtungskörper auszuschalten, kann dadurch vor einer Nachtfahrt problemlos wieder aufgeladen werden.

Im folgenden wird ein Ausführungsbeispiel der erfindungsgemässen Lichtanlage mit Bezug auf die Zeichnung ausführlich beschrieben. Es zeigt:
- **Fig. 1**: ein mit einer Lichtanlage nach der Erfindung ausgerüstetes Fahrrad, in stark vereinfachter Darstellung; und
- **Fig. 2**: eine Lichtanlage nach der Erfindung mit einem Schaltkreis, in stark vereinfachter, schematischer Darstellung.
- **Fig. 3**: das Hinterrad des Fahrrades mit der Antriebskette, der Schaltvorrichtung und der Lichtmaschinenvorrichtung, in stark vereinfachter, schematischer Darstellung, von hinten.
- **Fig. 4**: ein weiteres, mit Lichtanlage nach der Erfindung ausgerüstetes Fahrrad.

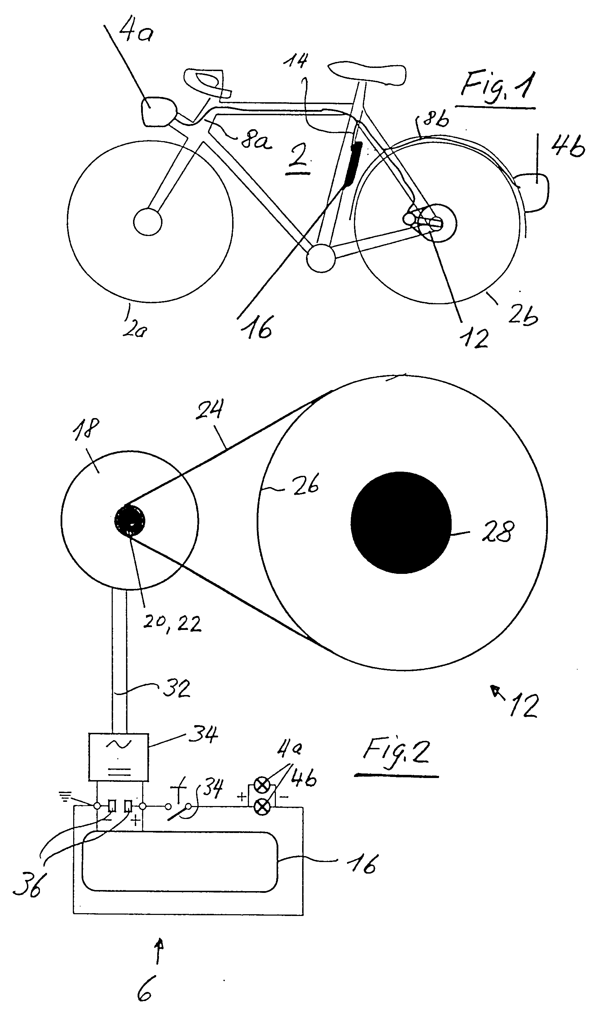

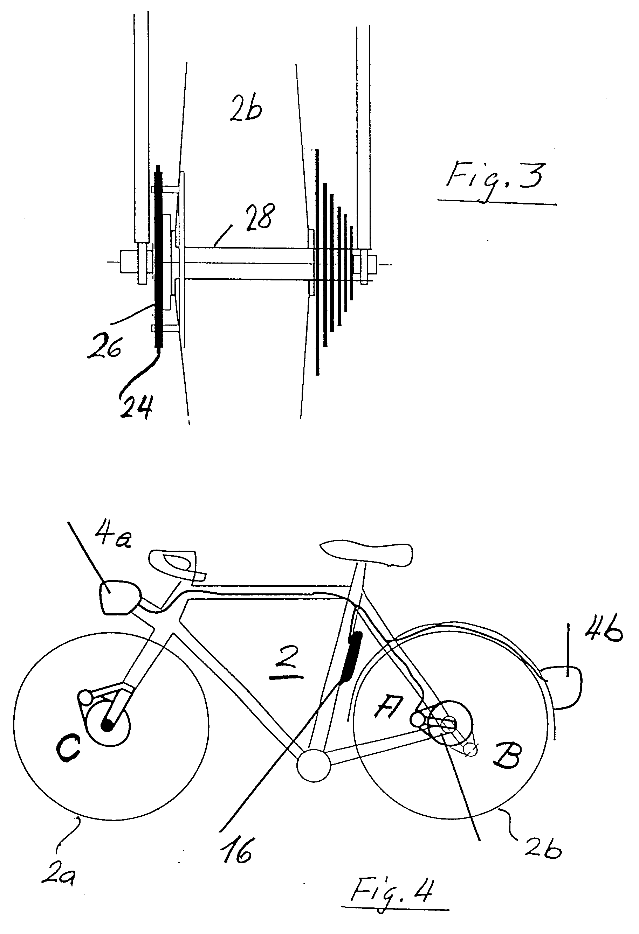

Das in **Fig. 1** dargestellte Fahrrad **2** weist ein Vorderrad, das ein Laufrad **2a** bildet, und ein Hinterrad, das ein Triebrad **2b** bildet, auf. Als Beleuchtungskörper sind ein Vorderlicht **4a** und ein Rücklicht **4b** vorgesehen, die in einem elektrischen Schaltkreis **6** angeordnet sind, welcher in **Fig. 2** dargestellt ist. Zum Schaltkreis **6** gehört ferner eine Kabelverbindung **8a, 8b**, welche das Vorderlicht **4a** und das Rücklicht **4b** parallel mit einer Lichtmaschinenvorrichtung **12** verbinden. Ebenfalls zum Schaltkreis **6** gehört eine weitere Kabelverbindung **14**, durch die ein Akkumulator **16** parallel zu den das Vorderlicht **4a** und das Rücklicht **4b** umfassenden Beleuchtungskörpern geschaltet ist.

Die Lichtmaschinenvorrichtung **12** ist in **Fig. 2** besser zu erkennen. Sie umfasst die eigentliche Lichtmaschine **18** mit der Lichtmaschinenwelle 20, auf der ein nur vereinfacht dargestelltes Lichtmaschinenritzel **22** angeordnet ist. Ein Endloselement **24** verbindet antriebsmässig das Lichtmaschinenritzel **22** mit einem Antriebsrad **26**. Das Antriebsrad **26** ist auf der Welle **28** des Hinterrades bzw. des Triebrades **2b** des Fahrrades **2** angeordnet und dreht sich solidarisch mit dieser.

Das Triebrad **2b** wird seinerseits gemäss **Fig. 3** durch ein weiteres Endloselement **30**, das durch eine übliche Fahrradkette gebildet ist, angetrieben. Die beiden Endloselemente **24** und **30** sind auf entgegengesetzten Seiten des Triebrades **2b** angeordnet. In **Fig. 3** erkennt man in der Mitte das als Triebrad **2b** dienende Hinterrad, rechts eine Anordnung **31** für die Gangschaltung, welche durch das hier nicht dargestellte Endloselement **30** angetrieben wird, und links das Antriebsrad **26** für das Endloselement **24**, mit welchem die Lichtmaschine **18** angetrieben wird.

Wie schon erwähnt, ist die Lichtmaschine **18** gemäss **Fig. 1** und **Fig. 2** mit dem Schaltkreis **6** verbunden. In **Fig. 2** erkennt man einen in üblicher Anordnung über eine Kabelverbindung **32** an die Lichtmaschine **18** angeschlossenen Gleichrichter **34**, der seinerseits mit dem Schaltkreis **6** in Verbindung steht. Im Schaltkreis **6** sind - wie schon erwähnt - der Akkumulator **16** und die Beleuchtungskörper, das heisst das Vorderlicht **4a** und das Rücklicht **4b**, angeordnet. Ein Schalter **34** dient dazu, die Beleuchtungskörper auszuschalten.

Damit der Akkumulator **16** auch durch eine externe Spannungsquelle aufladbar ist, sind im weiteren Ladebuchsen **36** vorgesehen.

Die Wirkungsweise der beschriebene Teile ist die folgende: sobald das Fahrrad fährt, wird durch die Rotation der nicht dargestellten Pedale das Endloselement **30** in Bewegung versetzt. Dadurch dreht sich die Welle **28** des Hinterrades **2b** des Fahrrades **2**. Mit der Welle **28** dreht sich auch das Antriebsrad **26**, so dass das Endloselement **24** in Bewegung versetzt wird. Dieses dient zum Antrieb der Lichtmaschinenwelle **20** über das Lichtmaschinenritzel **22**. Ueber den Gleichrichter **34** wird dadurch der Schaltkreis **6** alimentiert, so dass der Akkumulator **16** aufgeladen wird. Bei entsprechender Stellung des Schalters **34** sind auch die Beleuchtungskörper in Betrieb. Wird das Endloselement **24** nicht mehr bewegt, weil das Fahrrad **2** stillsteht, so ruht die Lichtmaschine **18**. Bei Umschaltung des Schalters **34** leuchten aber die Beleuchtungskörper **4a, 4b** weiter, gespiesen durch den Akkumulator **16**. Wenn der Akkumulator 16 vollständig entladen ist, so kann er bei Bedarf über die Ladebuchsen **36** durch eine externe Quelle aufgeladen werden.

**Fig. 4** zeigt weitere Varianten für die Anordnung der erfindungsgemässen Einrichtung an einem Fahrrad **2**. dabei ist mit **A** die vorgängig beschriebene Anordnung am Triebrad **2b**, das heisst am Hinerrad, bezeichnet. Falls eine MOntage an dieser Stelle nicht in FRage kommt, beispielsweise wegen eines Fahrradsständers, so kann die Eninrichtung auch gemäss **B**, ebenfalls am Hinterrad **2b**, oder gemäss **C** am Vorderrad **2a** erfolgen.

## Patentansprüche

1. Lichtanlage für mindestens zwei Räder **(2a, 2b)** aufweisendes Fahrzeug **(2)**, mit einer eine Lichtmaschinenwelle **(20)** besitzenden Lichtmaschine **(18)**, die über ein von einem Antriebsrad **(26)** getriebenes Endloselement **(24)** antreibbar ist, und mit einen an die Lichtmaschine Dynamo **(18)** angeschlossenen Schaltkreis **(6)** mit mindestens einem Beleuchtungskörper **(4a, 4b)** und einem Akkumulator **(16)**,
**dadurch gekennzeichnet**,
dass das Antriebsrad **(26)** auf der Welle **(28)** eines der Räder **(2a, 2b)** des Fahrzeuges **(2)** angeordnet ist und der Schaltkreis **(6)** einen Schalter **(34)** aufweist, mittels welchem der mindestens eine Beleuchtungskörper **(4a, 4b)** ausschaltbar ist.

2. Lichtanlage nach Patentanspruch 1,
**dadurch gekennzeichnet**,
dass das Endloselement **(24)** eine Antriebskette ist, welche das als Zahnrad ausgebildete Antriebsrad **(26)** antriebsmässig mit einem auf der Lichtmaschinenwelle **(20)** angeordneten Lichtmaschinenritzel **(22)** verbindet.

3. Lichtanlage nach Patentanspruch **1**,
**dadurch gekennzeichnet**,
dass das Antriebsrad auf der Welle eines als Laufrad dienenden Rades des Fahrzeuges angeordnet ist.

4. Lichtanlage nach Patentanspruch **1**,
**dadurch gekennzeichnet**,
dass das Antriebsrad **(26)** auf der Welle **(22)** eines als Triebrad **(2b)** dienenden Rades des Fahrzeuges **(2)** angeordnet ist, welche Welle über ein weiteres Endloselement **(30)** antreibbar ist.

5. Lichtanlage nach Patentanspruch **4**,
**dadurch gekennzeichnet**,
dass die Endloselemente **(24, 30)** auf entgegengesetzten Seiten des Triebrades **(2b)** angeordnet sind.

6. Lichtanlage nach Patentanspruch **1**,
**dadurch gekennzeichnet**,
dass der Akkumulator **(16)** Ladebuchsen **(36)** aufweist, über welche er durch eine externe Spamnnungsquelle aufladbar ist.
